**Europäisches Patentamt**

**European Patent Office**

**Office européen des brevets**

(11) Veröffentlichungsnummer: **0 194 992**
**A2**

## (12) EUROPÄISCHE PATENTANMELDUNG

(21) Anmeldenummer: **86890045.7**

(22) Anmeldetag: **27.02.86**

(51) Int. Cl.⁴: **F 16 D 3/10**

(30) Priorität: **07.03.85 AT 683/85**

(43) Veröffentlichungstag der Anmeldung:
**17.09.86 Patentblatt 86/38**

(84) Benannte Vertragsstaaten:
**DE FR GB**

(71) Anmelder: **Friedmann & Maier Aktiengesellschaft**
**Friedmannstrasse 7**
**A-5400 Hallein bei Salzburg(AT)**

(72) Erfinder: **Hlousek, Jaroslav, Dipl.-Ing.**
**Markt Nr. 295**
**A-5440 Golling(AT)**

(74) Vertreter: **Krause, Walter Dr. Dipl.-Ing. et al,**
**Singerstrasse 8**
**A-1010 Wien(AT)**

(54) Einrichtung zur drehzahlabhängigen Verstellung des relativen Drehwinkels zwischen zwei drehgekuppelten Bauteilen.

(57) Zur Ermöglichung einer vielfältigen Einflußnahme auf die Verstellcharakteristik einer Einrichtung zur drehzahlabhängigen Verstellung des relativen Drehwinkels zwischen zwei drehgekuppelten Bauteilen sind die Federwerke des zur Verstellung der beiden Bauteile dienenden Fliehkraftmeßwerks mit zumindest drei konzentrischen Schraubendruckfedern ausgebildet, von denen zumindest zwei auf einen zwischen ihnen eingespannten beweglichen Federteller wirken. Der bewegliche Federteller wird nach einem allein gegen die Wirkung einer ersten Feder erfolgenden Anfangshub des Fliehgewichtes bei steigender Drehzahl gegen die Wirkung der zweiten Feder vom Fliehgewicht mitgenommen, wobei sich die dritte Feder entspannt und nach deren vollständiger Entspannung ein weiterer Knickpunkt in der Gesamtkennlinie auftritt. Durch Anordnung zusätzlicher, in verschiedenen Drehzahlbereichen mit auf den beweglichen Federteller einwirkender Federn können weitere Knickpunkte der Gesamtkennlinie im Verstellbereich erreicht und die Steigungen der Gesamtkennlinie im Bereich zwischen den Knickpunkten nach Bedarf variiert werden.

Fig.1

EP 0 194 992 A2

## Einrichtung zur drehzahlabhängigen Verstellung des relativen Drehwinkels zwischen zwei drehgekuppelten Bauteilen

Die Erfindung bezieht sich auf eine Einrichtung zur drehzahlabhängigen Verstellung des relativen Drehwinkels zwischen zwei drehgekuppelten Bauteilen mit gemeinsamer Drehachse, mit einem Fliehkraftmeßwerk, dessen Fliehgewichte jeweils mit beiden Bauteilen zusammenwirken und entgegen der Kraft zumindest eines Federwerks zu deren drehzahlabhängigen Verstellung führen, wobei jedes Federwerk zumindest drei koaxial um einen Bolzen angeordnete Schraubendruckfedern aufweist und die erste dieser Federn zwischen einem mit dem Fliehgewicht in Verbindung stehenden Federteller und einem an einem äußeren Ende des Bolzens angeordneten äußeren Federteller eingespannt ist.

Eine derartige Einrichtung ist aus der DE-PS 649 296 bekannt und dient dort zum selbsttätigen Verstellen des Einspritzzeitpunktes bei Brennkraftmaschinen. Bei dieser Einrichtung kommen die drei Federn nacheinander zum Einsatz. Dies führt dazu, daß die über den Verstellwinkel aufgetragene Gesamtkennlinie aller drei Federn drei gegeneinander geneigte Abschnitte aufweist, deren Neigungswinkel mit zunehmendem Verstellwinkel zunimmt. Dadurch wird aber die Möglichkeit einer Einflußnahme auf die Verstellcharakteristik - also auf den Zusammenhang zwischen der Drehzahl und dem Verstellwinkel - sehr begrenzt, was insbesondere im Zusammenhang mit höheren Anforderungen an die Regeltätigkeit der Verstelleinrichtung, wie sie etwa bei der Verstellung des Einspritzzeitpunktes bei modernen Einspritz-Brennkraftmaschinen auftreten, sehr störend ist.

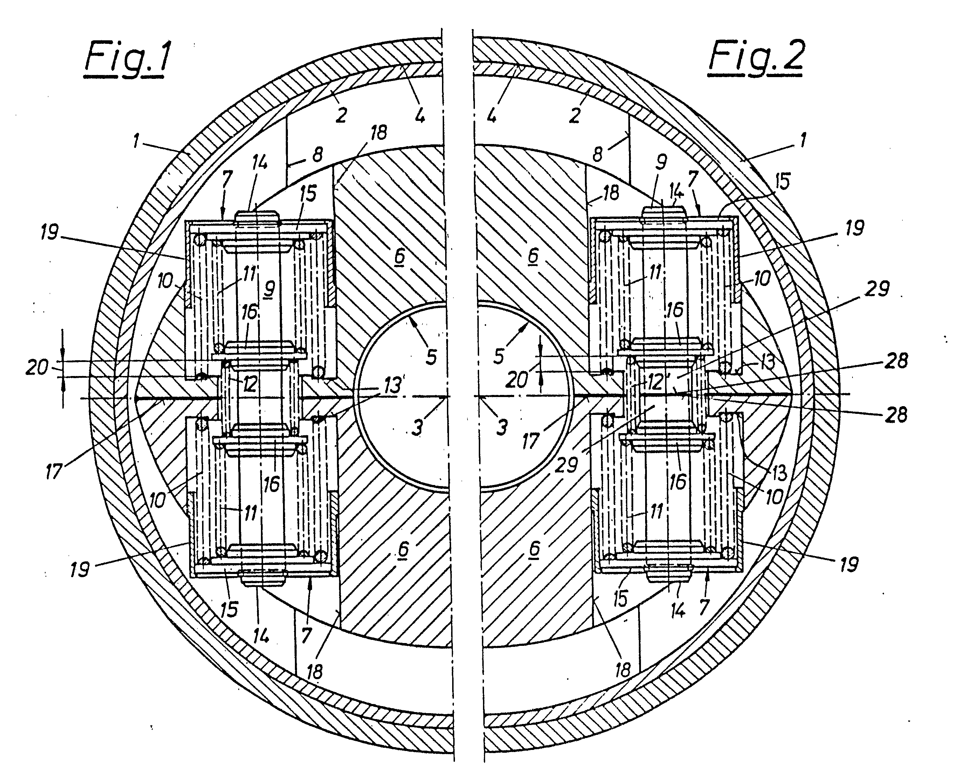

Eine ähnliche Art eines Fliehkraftverstellers zur drehzahlabhängigen Änderung des Einspritzzeitpunktes an Brennkraftmaschinen ist in der DE-AS 1 184 557 beschrieben. Bei
dieser Ausführung sind in den beiden Fliehgewichten jeweils
zwei Druckfedern untergebracht, welche der Fliehkraft entgegenwirken. Dabei ist, wie aus Abb. 1 entnommen werden
kann, die erste, äußere der beiden Federn von Anfang an
wirksam, wogegen die zweite, innere Feder erst dann zur
Wirkung kommt, wenn das Fliehgewicht bereits einen Teil
seines Weges zurückgelegt hat. Aus diesem Grunde hat die
Gesamtfederkennlinie zwei Abschnitte, von denen der erste
eine geringere Steigung als der zweite Abschnitt aufweist.
Mit anderen Worten, die Gesamtfederkennlinie ist geknickt
ausgeführt. Eine genaue Anpassung der Gesamtfederkennlinie
an einen vorgegebenen Verlauf ist daher auch bei dieser
Ausführungsform nicht möglich.

Die Erfindung stellt sich die Aufgabe, die Nachteile der
bekannten Ausführungen zu beseitigen und eine Einrichtung
zur drehzahlabhängigen Verstellung zweier drehgekuppelter
Bauteile zu schaffen, bei der mit zunehmendem Verstellwinkel die Steigung der drei Abschnitte der Federkennlinie
nicht vom Verstellwinkel 0 an stufenweise zunimmt, sondern
in ihrem mittleren Abschnitt einen niedrigeren Wert als in
den beiden anderen Abschnitten aufweist.

Ausgehend von einer Einrichtung der eingangs umrissenen Art
wird diese Aufgabe erfindungsgemäß dadurch gelöst, daß die
zweite dieser Federn zwischen dem äußeren Federteller und
einem längs des Bolzens beweglichen Federteller eingespannt ist, daß die dritte dieser Federn der zweiten Feder
entgegenwirkend zwischen einem gegenüber dem Bolzen fixen
inneren Bezugspunkt und dem beweglichen Federteller eingespannt ist, und daß der bewegliche Federteller nach einem
allein gegen die Wirkung der ersten Feder erfolgenden Anfangshub des Fliehgewichtes bei steigender Drehzahl gegen
die Wirkung der zweiten Feder vom Fliehgewicht mitnehmbar
ist, wobei sich die dritte Feder entspannt. Durch diese Anordnung der drei Federn, von denen die dritte defacto nur im mittleren Drehzahlbereich und dort gegen die Kraft der anderen Federn wirksam ist, kann auf sehr einfache Weise eine zumindest drei unterschiedliche Steigungsbereiche aufweisende geknickte Verstellkennlinie erhalten werden, deren Steigung im mittleren Bereich geringer als in den beiden anderen Bereichen ist.

Eine bevorzugte Ausführungsform der Erfindung bezieht sich auf eine Einrichtung mit zwei gleichen, in einer Radialebene sich gegenüberliegenden Fliehgewichten mit je zwei Federwerken mit für beide Fliehgewichte gemeinsamen, zwischen den äußeren Federtellern federbelastet gehaltenen Bolzen. Bei einer solchen Einrichtung sieht die Erfindung vor, daß die für je zwei Federwerke gemeinsame dritte Feder zwischen den beweglichen Federtellern der einem gemeinsamen Bolzen zugeordneten Federwerke eingespannt ist.

An sich ist der Gedanke, Vorrichtungen zur drehzahlabhängigen Verstellung zweier drehgekuppelter Bauteile mit zwei gleichen, in einer Radialebene sich gegenüberliegenden Fliehgewichten mit je zwei Federwerken mit für beide Fliehgewichte gemeinsamen, zwischen den äußeren Federtellern federbelastet gehaltenen Bolzen auszustatten, bereits bekannt, wie die DE-AS 1 287 853 zeigt. Doch dienen bei dieser Ausführung die beiden Bolzen lediglich zur gemeinsamen Abstützung der in zwei gegenüberliegenden Federwerken vorgesehenen koaxialen Federn und nicht dazu, um bei zwei gegenüberliegenden Federwerken mit jeweils drei Federn eine der beiden dritten Federn einzusparen, wie dies bei der erfindungsgemäßen Konstruktion der Fall ist.

Gemäß einer weiteren Ausbildung der Erfindung ist vorgesehen, daß jedes Federwerk koaxial zur zweiten Feder zumindest eine weitere Feder zwischen dem äußeren Federteller und dem beweglichen Federteller aufweist, mit welcher nach Erreichen einer bestimmten Drehzahl nach dem Anliegen des Fliehgewichtes am beweglichen Federteller letztere belastbar ist. Damit kann auf sehr vorteilhafte Weise eine weitere Einflußnahme auf die Verstellkennlinie der Einrichtung im obersten Drehzahlbereich ermöglicht werden. Über die Wahl der entspannten Länge dieser weiteren Feder(n) kann deren Wirksamwerden bereits vor der völligen Entspannung der dritten Feder oder aber erst nach diesem Punkt eintreten - die Steilheit der Verstellkennlinie im Bereich der höchsten Drehzahlen kann wie üblich über die Federsteifigkeit beeinflußt werden.

In weiterer Ausbildung der Erfindung kann auch vorgesehen sein, daß jedes Federwerk koaxial zur dritten Feder zumindest eine zusätzliche Feder zwischen dem gegenüber dem Bolzen fixen inneren Bezugspunkt und dem beweglichen Federteller aufweist, deren entspannte Länge sich von der entspannten Länge der dritten Feder unterscheidet. Damit kann ebenfalls auf die Form der Verstellkennlinie auf einfache Weise Einfluß genommen werden - durch die unterschiedliche Lage der Hub- bzw. Drehzahlpunkte, an denen die dritte bzw. die zusätzliche(n) Feder(n) unwirksam werden, können weitere "Knickpunkte" der Kennlinie geschaffen bzw. auch allzu ausgeprägte Knicke vermieden werden.

In weiterer Ausgestaltung der Erfindung ist vorgesehen, daß der bewegliche Federteller jeweils frei beweglich auf dem Bolzen ist und daß in der Ruhestellung die auf diesen Federteller wirkenden Federkräfte ausgeglichen sind. Durch diese Maßnahmen ist sichergestellt, daß bereits vom Beginn der Mitnahme des beweglichen Federtellers durch das nach außen gehende Fliehgewicht an die gesamte Federkraft sich aus der Kraft der ersten Feder zuzüglich der um die Kraft der dritten und ggf. zusätzlichen Feder reduzierten Kraft der zweiten Feder zusammensetzt, was an diesem Knickpunkt der Verstellkennlinie sich lediglich in einer plötzlichen Erhöhung der Steigung äußert, wobei diese Steigung aber immer auf endliche Werte beschränkt bleibt. Soferne in diesem Zusammenhang sichergestellt ist, daß sich die dritte und ggf. zusätzliche Feder im Verlaufe des weiteren Hubes des Fliehgewichtes völlig entspannen kann, so wirkt ab diesem - zweiten bzw. weiteren - Knickpunkt in der Verstellkennlinie die Kraft der ersten und zweiten Feder gemeinsam, was wiederum einer verminderten Steigung entspricht.

Gemäß einer anderen Ausgestaltung der Erfindung ist der bewegliche Federteller in seiner Ruhestellung von der zweiten und gegen die dritte Feder samt allfälliger zusätzlicher Feder gegen einen Anschlag vorgespannt. Auf diese Weise ergibt sich ab dem Anliegen des Fliehgewichtes am beweglichen Federteller vorerst eine Blockierung des weiteren Hubes des Fliehgewichtes bis die Fliehkraft ausreichend groß ist, um die zusätzliche Vorspannung durch die zweite Feder reduziert um die Vorspannung der dritten Feder samt allfälliger zusätzlicher Feder zu überwinden. Ab dieser Drehzahl folgt sodann die Verstellkennlinie wieder der durch die Kraft der ersten Feder und der durch die Kraft der zweiten reduziert um die Kraft der dritten Feder samt allfälliger zusätzlicher Feder gegebenen Summenkraft; für den am Ende der Wirksamkeit der dritten Feder auftretenden zweiten Knick in der Verstellinie gilt wieder das oben bereits Ausgeführte.

Im zuletzt genannten Zusammenhang ist es besonders vorteilhaft, wenn gemäß einer weiteren Ausbildung der Erfindung der Anschlag von einer Schulter am Bolzen, bzw. an einer auf dem Bolzen aufgesetzten Hülse, gebildet ist, da diese eine besonders einfache Ausgestaltung ohne größere zusätzliche konstruktive Aufwendungen an der Verstelleinrichtung ist.

Die Erfindung wird im folgenden anhand der in der Zeichnung dargestellten Ausführungsbeispiele näher erläutert.

Figur 1 zeigt einen Schnitt durch die erfindungswesentlichen Teile einer gemäß der Erfindung ausgestalteten Einrichtung zur drehzahlabhängigen Verstellung des relativen Drehwinkels zwischen zwei drehgekuppelten Bauteilen mit gemeinsamer Drehachse,

Figur 2 zeigt eine im wesentlichen der Fig. 1 entsprechende, gegenüber dieser jedoch spiegelbildliche Darstellung eines anderen Ausführungsbeispieles,

Figur 3 zeigt ein Diagramm mit der Federkraft F über dem Hub h des Fliehgewichtes, zugehörig zu den beiden Ausführungsbeispielen nach den ·Fig. 1 und 2,

Figur 4 zeigt das dem Diagramm nach Fig. 3 zugeordnete Diagramm der Verstellcharakteristik mit dem relativen Verstellwinkel $\alpha$ aufgetragen über der Drehzahl n,

Figur 5 zeigt einen der Darstellung der Fig. 1 entsprechenden Schnitt durch ein weiteres Ausführungsbeispiel und

Figur 6 zeigt ein Verstellwinkel $\alpha$/Drehzahl n-Diagramm der Ausführung nach Fig. 5.

Die in Fig. 1 geschnitten und teilweise schematisch dargestellte Einrichtung dient zur drehzahlabhängigen Verstellung des relativen Drehwinkels zwischen zwei drehgekuppelten Bauteilen 1, 2 mit gemeinsamer Drehachse 3, wobei die beiden Bauteile 1, 2 nach Art eines Gleitlagers an einer Führungsfläche 4 gegeneinander zentriert sind. Zur Sicherstellung der drehzahlabhängigen Verstellung ist ein Fliehkraftmeßwerk 5 vorgesehen, dessen - hier zwei - Fliehgewichte 6 jeweils auf hier nicht weiter dargestellte Weise mit beiden Bauteilen 1, 2 zusammenwirken und entgegen der Kraft von zwei Federwerken 7 zur Winkelverstellung der beiden Bauteile 1, 2 führen.

Unmittelbar kann diese Verstellung beispielsweise dadurch erfolgen, daß sowohl an den Fliehgewichten 6 als auch an den Bauteilen 1, 2 zusammenwirkende Führungsflächen vorgesehen sind, die in einer Radialebene jeweils unterschiedliche Führungsrichtungen aufweisen und damit über den eine bestimmte Drehzahl repräsentierenden jeweiligen Hub der Fliehgewichte 6 eine definierte gegenseitige Winkelverstellung der Bauteile 1, 2 erzwingen. Dargestellt sind hier nur die Führungsflächen 8 zwischen einem der beiden Bauteile 1, 2 einerseits und den Fliehgewichten 6 andererseits - die zwischen dem anderen der beiden Bauteile und den Fliehgewichten 6 wirksamen Führungsflächen müßten in der hier gewählten Darstellung beispielsweise unter einem bestimmten
Winkel geneigt zu den Führungsflächen 8 verlaufen.

Jedes der Federwerke 7, von denen in der Ausführung gemäß
Fig. 1 insgesamt vier Stück vorhanden sind, weist drei koaxial zum Bolzen 9 angeordnete Schraubendruckfedern 10, 11,
12, auf, von denen die erste Feder 10 zwischen einem unmittelbar am Fliehgewicht 6 ausgebildeten Federteller 13 und
einem am äußeren Ende 14 des Bolzens 9 angeordneten äußeren
Federteller 15 eingespannt ist. Die zweite Feder 11 jedes
Federwerks 7 ist zwischen dem äußeren Federteller 15 und
einem längs des Bolzens 9 beweglichen Federteller 16 eingespannt; die dritte Feder 12 liegt an der der zweiten Feder
11 abgewandten Seite des beweglichen Federtellers 16 an
diesem an und ist mit ihrem anderen Ende an einem gegenüber
dem Bolzen 9 fixen inneren Bezugspunkt - hier die gedachte
Mittelebene 17 zwischen den beiden Fliehgewichten 6 - abgestützt. Abweichend von der dargestellten Ausführung mit der
für je zwei Federwerke 7 gemeinsamen dritten Feder 12 zwischen dem beweglichen Federteller 16 der einem gemeinsamen
Bolzen 9 zugeordneten Federwerke 7 wäre natürlich auch eine
Ausführung mit separaten dritten Federn 12 möglich, wobei
für diesen Fall auch ein gegenüber dem Bolzen tatsächlich
fest angeordneter Anschlag od. dgl. für die beiden dritten
Federn 12 vorgesehen werden könnte.

Der Vollständigkeit halber ist hier auch darauf hinzuweisen,
daß die Federwerke 7 in Bohrungen bzw. Ausdrehungen 18 der
Fliehgewichte 6 angeordnet sind  - um unnötige Reibung bzw.
eine Behinderung der beweglichen Teile auszuschließen, sind
die äußeren Federteller 15 mit Hülsen 19 versehen, welche in
den Ausdrehungen 18 gleitend geführt sind.

Die Wirkungsweise der beschriebenen Anordnung nach Fig. 1
läßt sich kurz wie folgt darstellen:

Gemäß der eingezeichneten Stellung der beiden Fliehgewichte
6 befindet sich die Einrichtung in Ruhe bzw. rotiert mit
einer Drehzahl, bei der die Fliehkraft der Fliehgewichte 6 zu klein ist, um die Vorspannung der vorerst alleine wirkenden ersten Feder 10 zu überwinden. Bei steigender Drehzahl beginnen die Fliehgewichte 6 entgegen der Kraft der ersten Feder 10 nach außen zu wandern - die beiden zweiten Federn 11 stehen dabei mit der mittleren, für beide Federwerke 7 gemeinsamen, dritten Federn 12 im Gleichgewicht, sodaß sich bezüglich der Lage der beweglichen Federteller 16 nichts ändert.

Nach einem Anfangshub 20 liegt jedes der Fliehgewichte 6 mit dem Bereich seines Federtellers 13 an der inneren Seite des beweglichen Federtellers 16 an - ab dieser Drehzahl ist die Federkraft auf jedes der Fliehgewichte 6 bestimmt durch die Summe der Kraft der ersten Feder 10 und der zweiten Feder 11, reduziert um die jeweils wirkende Kraft der mit steigender Drehzahl immer mehr entspannten dritten Feder 12.

Ab einer bestimmten Drehzahl wird die dritte Feder 12 völlig entspannt sein, wonach nur mehr die erste Feder 10 und die zweite Feder 11 gemeinsam entgegen der Fliehkraft auf das Fliehgewicht 6 wirken.

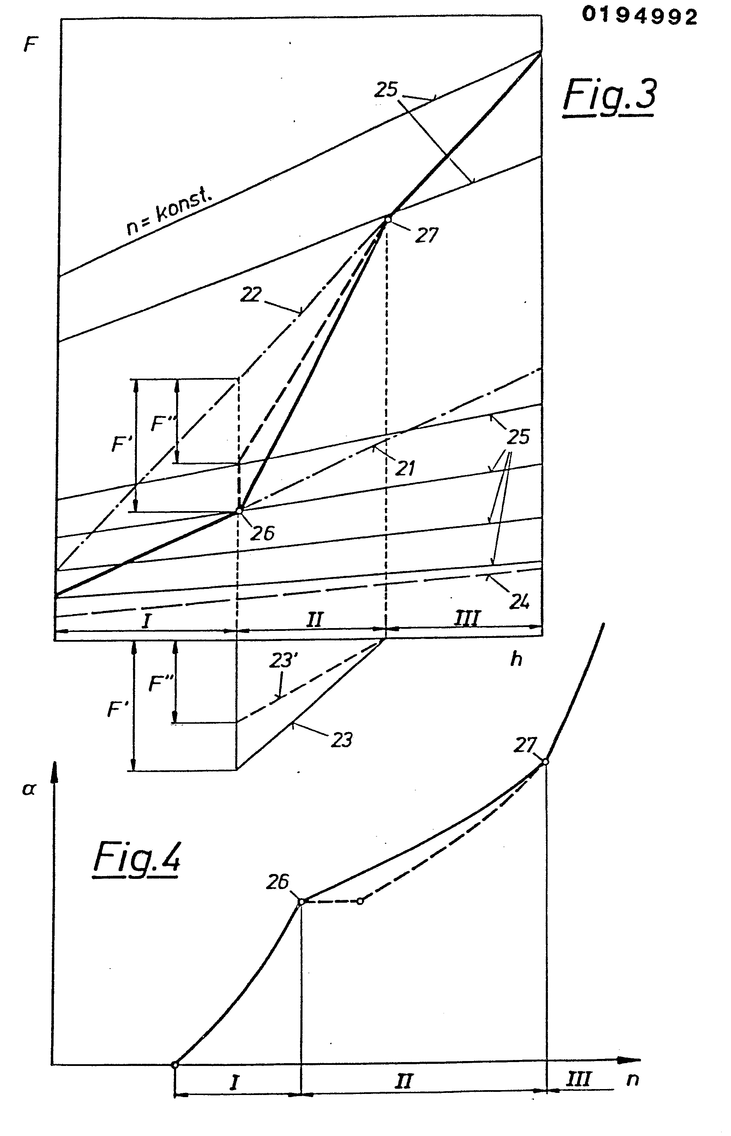

Die beschriebene Funktion kann auch anhand der in den Fig. 3 und 4 dargestellten Diagramme erläutert werden: Mit 21 ist in Fig. 3 die Federkennlinie der ersten Feder 10 bezeichnet, mit 22 die Federkennlinie der gemeinsam wirkenden ersten Feder 10 und zweiten Feder 11, mit 23 die Federkennlinie der dritten Feder 12 bei der Ausführung nach Fig. 1 und mit 23' die Federkennlinie der dritten Feder 12', bei der anschließend noch genauer besprochenen Ausführung nach Fig. 2.

Die mit 24 bezeichnete unterste strichlierte Linie kennzeichnet eine Rückdrückkraft, die sich aus dem durch die Einrichtung durchgeleiteten Drehmoment ergibt. Diese Kraft wirkt wie eine zusätzliche Grundlastfeder über den ganzen Verstellbereich und ist bei der Auslegung der Federwerke zu berücksichtigen, hat aber im Zusammenhang mit der vorliegenden Erfindung keine unmittelbare Bedeutung.

Die mit 25 bezeichneten Kurven sind die sogenannten Pendellinien; das sind die Linien der Fliehkraft über dem Fliehgewichtshub bei konstanter Drehzahl. Diese Linien sind zueinander ähnlich mit dem Quadrat des Drehzahlverhältnisses, d.h. man erhält aus der Linie für n = 1000 U/min jene für n = 800 U/min indem man die Ordinatenwerte jeweils mit $0,8^2 = 0,64$ multipliziert. Diese Pendellinien haben einen gemeinsamen Durchstoßpunkt auf der Abszisse außerhalb des betrachteten Hubbereiches.

Die durchgezogene dicke Linie in Fig. 3 veranschaulicht den Verlauf der insgesamt von jedem Federwerk 7 ausgeübten Gegenkraft F in Abhängigkeit vom Hub h des Fliehgewichtes 6. Nachdem die Fliehgewichte anfänglich wie beschrieben ausschließlich gegen die Wirkung der ersten Feder 10 bei steigender Drehzahl nach außen gehen - Bereich I in Fig. 3 - folgt ab dem Punkt 26 der Bereich II, in dem einerseits die Kraft der ersten und zweiten Federn 10, 11 gemeinsam (Kennlinie 22) allerdings vermindert um die Kraft der dritten Feder 12 (Kennlinie 23) wirkt. Sobald die dritte Feder 12 beim Punkt 27 bzw. dem zugehörigen Hub h oder der zugehörigen Drehzahl n ganz entspannt ist, folgt die Gesamtkennlinie im Bereich III der Summenkennlinie 22 der Federn 10 und 11.

Es ist also mit der dargestellten und beschriebenen Einrichtung auf sehr einfache Weise eine in den Punkten 26 und 27 und damit doppelt geknickte Gesamtkennlinie jedes Federwerkes im betrachteten Hub- bzw. Drehzahlbereich realisiert, was vielfältige Möglichkeiten zur Einflußnahme auf die Verstellcharakteristik der Einrichtung ergibt.

In Fig. 4 ist der relative Verdrehwinkel $\alpha$ über der Drehzahl n aufgetragen - die Bereiche I, II und III entsprechen denen zu Fig. 3 definierten, auch die Knickpunkte 26 und 27 sind bereits oben im Zusammenhang mit Fig. 3 erklärt worden.

Die Ausführung nach Fig. 2 unterscheidet sich nur in einem wesentlichen Detail von der nach Fig. 1. Der bei der Ausführung nach Fig. 1 gegebene Ausgleich der auf den beweglichen Federteller 16 in der Ruhestellung wirkende Kraft der zweiten Federn 11 einerseits und der dritten Feder 12 anderseits ist hier nicht gegeben - in Fig. 2 ist statt dessen vorgesehen, daß der bewegliche Federteller 16 in seiner Ruhestellung - also bei stillstehender Einrichtung bzw. anfänglich geringen Drehzahlen - von der zweiten Feder 11 und gegen die dritte Feder 12 gegen einen Anschlag 28 vorgespannt ist. Dies bedeutet, daß nach dem Durchlaufen des Bereiches I - siehe die Fig. 3 und 4 - am Punkt 26 vorerst ein Stillstand der Fliehgewichte eintritt, bis die Fliehkraft groß genug ist, um die erhöhte Vorspannung der zweiten Feder 11 zu überwinden. Erst ab dieser Drehzahl kann dann die Gesamtkennlinie wieder der entsprechend zusammengesetzten Summenkennlinie aller drei Federn folgen. Die Gesamtkennlinie für das Ausführungsbeispiel nach Fig. 2 ist in den Fig. 3 und 4 im Bereich II strichliert eingetragen - in den Bereichen I und III ist sie gleich wie zum Ausführungsbeispiel nach Fig. 1.

Es ist in diesem Zusammenhang auch noch darauf hinzuweisen, daß mit F' in Fig. 3 die in der Ruhestellung gegebene Federkraft der dritten Feder 12 aus Fig. 1 bezeichnet ist. Mit F" ist die entsprechende - bezogen auf die Vorspannung der zweiten Feder 11 geringere Federkraft der dritten Feder 12' gemäß Fig. 2 bezeichnet.

Der Anschlag 28 bei der Ausführung nach Fig. 2 ist unmittelbar an einer auf dem Bolzen 9 aufgesetzten, beispielsweise auch mit dem beweglichen Federteller 16 einstückigen Hülse 29 ausgebildet, wobei sich die beiden Hülsen 29 der einem gemeinsamen Bolzen 9 zugeordneten Federwerke 7 in der Ruhestellung in der Mittelebene 17 der beiden Fliehgewichte 6 gegenseitig stützen. Davon abweichend könnte aber auch eine fix am Bolzen 9 angeordnete Schulter od. dgl. als Anschlag 28 vorgesehen werden.

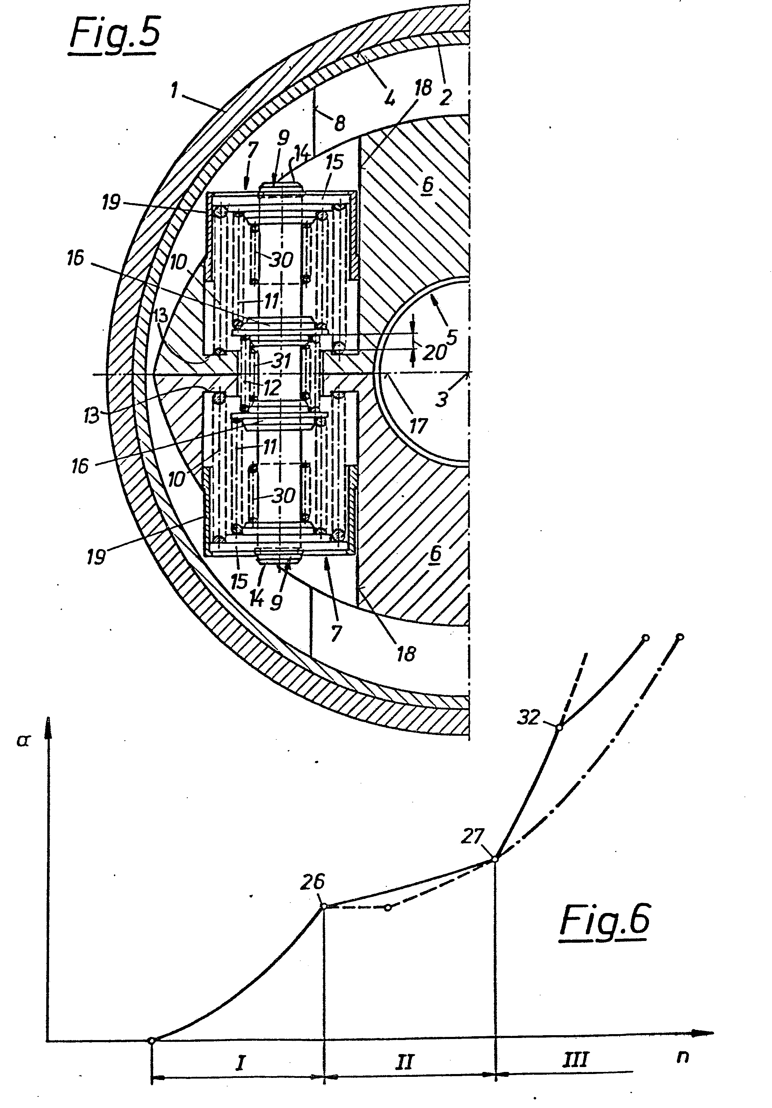

Eine über die Möglichkeiten der Ausbildungen gemäß der Fig.1 und 2 hinausgehende Einflußnahme auf die Verstellcharakteristik der Einrichtung ist mit der in Fig. 5 dargestellten Anordnung gegeben, welche sich im wesentlichen nur dadurch von der Ausführung nach Fig. 1 unterscheidet, daß hier nun jedes Federwerk 7 koaxial innerhalb der zweiten Feder 11 eine weitere Feder 30 sowie koaxial zur dritten Feder 12 eine zusätzliche Feder 31 aufweist. Die weitere Feder 30 wirkt ebenso wie die zweite Feder 11 zwischen dem äußeren Federteller 15 und dem beweglichen Federteller 16, wobei diese weitere Feder 30 allerdings erst nach Erreichen einer bestimmten Drehzahl nach dem Anliegen des Fliehgewichtes 6 am beweglichen Federteller 16 wirksam wird - also eine geringere entspannte Länge aufweist, als zum ständigen Kontakt mit beiden Federtellern 15, 16 erforderlich wäre. Die zusätzliche Feder 31 - welche sich hier ebenfalls wie die weitere Feder 30 praktisch unmittelbar am Umfang des Bolzens 9 abstützt - ist so ausgebildet, daß ihre entspannte Länge sich von der entspannten Länge der dritten Feder 12 unterscheidet.

Durch diese beiden Federn 30 bzw. 31 tritt hinsichtlich der Funktion der Einrichtung gegenüber der Fig. 1 folgende Abweichung ein: Ab dem Anliegen des Fliehgewichtes 6 am beweglichen Federteller 16 wirkt die Summenkraft der Federn 10 und 11 vermindert um die der Federn 12 und 31. Durch die unterschiedlich entspannte Länge der Federn 12 und 31 kommt es in weiterer Folge zu unterschiedlichen Endpunkten ihrer Wirksamkeit, also zu Knicken in der Gesamtkennlinie. Sobald die weitere Feder 30 vom beweglichen Federteller 16 beaufschlagt wird, wirkt diese zusätzlich zu den Federn 10 und 11, wobei dieser Zeitpunkt auch unter Umständen bereits vor dem Außerkrafttreten der Federn 12, 31 liegen kann. Auf diese sehr einfache Weise sind also vielfältigste Einflußnahmen auf die Gesamtkennlinie möglich - auch könnten bedarfsweise noch mehrere koaxiale Federn entsprechend der Feder 30 und der Feder 31 angeordnet werden, die in ihrer entspannten Länge und Federcharakteristik je nach Bedarf ausgewählt werden und damit dem jeweiligen Bedarf angepaßte Änderungen der Verstellcharakteristik der Einrichtung sicherstellen.

Die Anordnung derartiger weiterer bzw. zusätzlicher Federn ist natürlich auch bei gemäß Fig. 2 ausgebildeten Einrichtungen möglich und erfordert, abgesehen von der Dimensionierung und Ausbildung der Federteller, keine besondere Änderung.

Die zur Fig. 5 nicht separat beschriebenen Bezugszeichen sind in gleicher Bedeutung auch bereits zu den Fig. 1 und 2 verwendet und beschrieben worden.

Anhand des Diagramms von Fig. 6 soll noch die Verstellcharakteristik einer Einrichtung beschrieben werden, welche - wie in Fig. 5 dargestellt - eine weitere Feder 30 koaxial zur zweiten Feder 11 in jedem Federwerk 7 aufweist, jedoch - abweichend von der Darstellung von Fig. 5 - im mittleren Bereich zwischen den beiden beweglichen Federtellern 16 nur die dritte Feder 12 aufweist.

Der Bereich I ist wiederum durch die alleinige Wirksamkeit der ersten Feder 10 charakterisiert. Am Punkt 26 erfolgt ein Knick in der Gesamtkennlinie, der auf das zusätzliche Wirksamwerden der Resultierenden aus der Kraft der zweiten Feder 11 und der dritten Feder 12 zurückzuführen ist - die durchgehend ausgezogene Linie entspricht auch hier wiederum (s.die Fig. 3 und 4) der Ausführung ohne Vorspannung des beweglichen Federtellers 16 durch die zweite Feder 11 gegen einen Anschlag (analog Fig. 1) - die strichliert ausgezogene Gesamtkennlinie im Bereich II in Fig. 6 resultiert aus einer vorgespannten Ausführung (analog zu Fig. 2). Ab dem Punkt 27 ist wiederum die dritte Feder 12 zufolge ihrer völligen Entspannung wirkungslos. Wenn die weitere Feder 30 bereits ab dieser Drehzahl am beweglichen Federteller 16 anliegt, folgt die Gesamtkennlinie im Bereich III in Fig. 6 der strichpunktierten Linie. Wenn die weitere Feder 30 im entspannten Zustand kürzer ist, wird vorerst die Fliehkraft gegen die Summenkraft der ersten Feder 10 und der zweiten

- 13 -                                    **0194992**

Feder 11 weiterwirken. Erst nach dem Punkt 32, bei Wirksamwerden der weiteren Feder 30, wird ein weiterer Knick auftreten, und die Gesamtkennlinie wird der in Fig. 6 durchgehend ausgezogenen Linie folgen.

Abweichend von den dargestellten Ausführungen könnten einzelne oder auch alle der in den Federwerken angeordneten Federn mit nichtlinearer Kennlinie ausgeführt werden, was über die beschriebenen Möglichkeiten hinausgehend zusätzliche Einflußnahmen auf die Gesamtkennlinie des Fliehkraftmeßwerkes und damit auf die Verstellcharakteristik ermöglicht.

Patentansprüche

1. Einrichtung zur drehzahlabhängigen Verstellung des relativen Drehwinkels zwischen zwei drehgekuppelten Bauteilen mit gemeinsamer Drehachse, mit einem Fliehkraftmeßwerk, dessen Fliehgewichte jeweils mit beiden Bauteilen zusammenwirken und entgegen der Kraft zumindest eines Federwerks zu deren drehzahlabhängiger Verstellung führen, wobei jedes Federwerk zumindest drei koaxial um einen Bolzen angeordnete Schraubendruckfedern aufweist und die erste dieser Federn zwischen einem mit dem Fliehgewicht in Verbindung stehenden Federteller und einem an einem äußeren Ende des Bolzens angeordneten äußeren Federteller eingespannt ist, d a d u r c h g e k e n n z e i c h n e t, daß die zweite (11) dieser Federn zwischen dem äußeren Federteller (15) und einem längs des Bolzens (9) beweglichen Federteller (16) eingespannt ist, daß die dritte (12, 12') dieser Federn der zweiten Feder (11) entgegenwirkend zwischen einem gegenüber dem Bolzen (9) fixen inneren Bezugspunkt (17) und dem beweglichen Federteller (16) eingespannt ist, und daß der bewegliche Federteller (16) nach einem allein gegen die Wirkung der ersten Feder (10) erfolgenden Anfangshub des Fliehgewichtes (6) bei steigender Drehzahl gegen die Wirkung der zweiten Feder (11) vom Fliehgewicht (6) mitnehmbar ist, wobei sich die dritte Feder (12, 12') entspannt.

2. Einrichtung nach Anspruch 1 mit zwei gleichen, in einer Radialebene sich gegenüberliegenden Fliehgewichten mit je zwei Federwerken mit für beide Fliehgewichte gemeinsamen, zwischen den äußeren Federtellern federbelastet gehaltenen Bolzen, dadurch gekennzeichnet, daß die für je zwei Federwerke (7) gemeinsame dritte Feder (12, 12') zwischen den beweglichen Federtellern (16) der einem gemeinsamen Bolzen (9) zugeordneten Federwerke (7) eingespannt ist.

3. Einrichtung nach Anspruch 1 oder 2, dadurch gekennzeichnet, daß jedes Federwerk (7) koaxial zur zweiten Feder (11) zumindest eine weitere Feder (30) zwischen dem äußeren Federteller (15) und dem beweglichen Federteller (16) aufweist, mit welcher nach Erreichen einer bestimmten Drehzahl nach dem Anliegen des Fliehgewichtes (6) am beweglichen Federteller (16) letzterer belastbar ist (Fig. 5).

4. Einrichtung nach einem der Ansprüche 1 bis 3, dadurch gekennzeichnet, daß jedes Federwerk (7) koaxial zur dritten Feder (12, 12') zumindest eine zusätzliche Feder (31) zwischen dem gegenüber dem Bolzen (9) fixen inneren Bezugspunkt (17) und dem beweglichen Federteller (16) aufweist, deren entspannte Länge sich von der entspannten Länge der dritten Feder (12, 12') unterscheidet (Fig. 5).

5. Einrichtung nach einem der Ansprüche 1 bis 4, dadurch gekennzeichnet, daß der bewegliche Federteller (16) jeweils frei beweglich auf dem Bolzen (9) ist und daß in der Ruhestellung die auf diesen Federteller (16) wirkenden Federkräfte ausgeglichen sind.

6. Einrichtung nach einem der Ansprüche 1 bis 4, dadurch gekennzeichnet, daß der bewegliche Federteller (16) in seiner Ruhestellung von der zweiten (11) und gegen die dritte Feder (12') samt allfälliger zusätzlicher Feder (31) gegen einen Anschlag (28) vorgespannt ist (Fig. 2 und 5).

7. Einrichtung nach Anspruch 6, dadurch gekennzeichnet, daß der Anschlag (28) von einer Schulter am Bolzen (9), bzw. an einer auf dem Bolzen aufgesetzten Hülse (29), gebildet ist.

86 02 18
Kr/2/Fr

0194992

Fig.1  Fig.2

0194992

Fig.3

Fig.4

Fig.5

3/3

0194992

Fig.6